# EUROPEAN PATENT SPECIFICATION

(11) **EP 2 851 569 B1**
(45) Date of publication and mention of the grant of the patent: **04.10.2017**
(21) Application number: 14182764.2
(22) Date of filing: 29.08.2014
(51) Int. Cl.: F15D 1/00, F01D 25/18, F15C 1/16

(54) **Gas turbine engine with vortex fluid flow device**
Gasturbinenmotor mit Wirbelflüssigkeitsströmungsvorrichtung
Turbine à gaz avec dispositif d'écoulement de fluide tourbillonnaire

(30) Priority: 18.09.2013 GB 201316543
(43) Date of publication of application: 25.03.2015
(73) Proprietor: Rolls-Royce plc, London SW1E 6AT (GB)
(72) Inventor: Arai, Yuka, Derby, Derbyshire DE24 8BJ (GB); Arrillaga-Monge, Alexander, Derby, Derbyshire DE24 8BJ (GB); Jackson, Christopher, Derby, Derbyshire DE24 8BJ (GB); Speight, William, Derby, Derbyshire DE24 8BJ (GB)
(74) Representative: Rolls-Royce plc

(56) References cited:
- GB-A- 2 391 959
- US-A- 1 839 616
- US-A- 4 249 575

## Description

The present invention relates to devices for controlling fluid flow. More specifically the invention relates to vortex fluid flow devices and gas turbine engines. The invention has particular application as part of a fluid flow system in a gas turbine engine. It allows control of fluid flow in forward and reverse directions using a lighter, smaller and/or more efficient device than previously possible. The invention is not however limited to such applications and may for example be used in alternative fluid control systems.

Vortex devices use the properties of swirling flows to control various aspects of fluid flow, including direction, pressure and mass flow. Such devices generally rely on boundary conditions between fluid flows and/or between fluid flows and walls. In some cases the arrangement of walls and ports in the device may be sufficient to influence flow in the manner desired, although specifically introduced control flows may also be used to prompt a change.
A vortex device designed as a diode permits relatively unobstructed flow in a forward direction (creating little pressure drop) while limiting flow in the reverse direction (creating a relatively large pressure drop). In the forward direction fluid flows relatively unhindered through the device. When however there is flow in the reverse direction, the flow forms a vortex, creating a pressure drop greater than that occurring with forward flow. Such devices may be characterised by a so called turn-down ratio, which for a given pressure ratio applied over the device, is equal to the mass flow that would occur in the forward direction divided by the mass flow that would occur in the reverse direction. Diodicity offers an alternative characterisation of such devices, defined as the pressure drop that would occur in the reverse direction divided by the pressure drop that would occur in the forward direction, at a given mass flow rate.

One such vortex diode device is the Zobel diode. This has a disc like chamber. A forward flow inlet is in direct fluid communication with the chamber from a direction substantially perpendicular to the top surface of the disc. A reverse flow inlet is in direct fluid flow communication with the chamber, at the periphery of and substantially tangential to its side wall. When forward flow occurs (entering via the forward flow inlet and leaving via the reverse flow inlet) the flow is relatively unhindered. When reverse flow occurs, fluid entering via the reverse flow inlet forms a vortex guided by the side wall of the chamber. On entry to the chamber, flow in the reverse direction has a total pressure which encompasses both a static and dynamic pressure term. The velocity of the vortex formed in the chamber at any particular point is inversely proportional to the streamline radius within the chamber. Thus at the smallest radius (at the forward flow inlet) the vortex experiences the highest velocity and dynamic pressure, corresponding to a drop in static pressure in this region. Consequently there is a significant pressure drop across the diode in the reverse flow direction.

US4249575 discloses a vortex diode having a cylindrical vortex chamber having an enlarged peripheral channel, one or more tangential ports communicating with the channel and two co-axially arranged axial ports on opposite end walls of the chamber. The height of the chamber is less than three quarters of the diameter of the axial ports. The channel may communicate with the vortex chamber either radially or tangentially with respect to the channel.

US1839616 discloses a device for resisting reverse flow in fluid lines, comprising a housing containing a chamber of approximately circular shape, said chamber being free from vanes and substantially unobstructed, an inlet close to the centre of said chamber, an outlet approximately tangential to said chamber, so that fluid flowing in through said inlet may flow directly and with low resistance to and through said outlet and so that fluid flowing in through said outlet in a reverse direction will rotate in said chamber and encounter substantial resistance to such reverse flow, and guiding means built into said inlet for preventing a turbulent movement of the fluid in case of a flow opposite to the normal direction.

GB2391959 discloses a gas turbine bearing chamber vent comprising a fluid diode having cylindrical chamber with coaxial and tangential ducts. Fluid entering the chamber trough the tangential duct is caused to follow a first, vortex path to produce high flow resistance but reverse fluid flow entering trough the coaxial duct follows a second path and does not form a vortex, thus producing lower flow resistance. The vent is connected to, on or in a bearing chamber maintained at lower than ambient pressure and allows venting on temporary pressure rise. Bearing lubricant entrained in the vented air is separated by centrifugal force from the air in the vent and return ducts and sumps may be provided to retain and return lubricant once a lower bearing chamber pressure is resumed. Vents may be arranged in series with either coaxial-coaxial or tangential-coaxial duct connections.

According to the invention there is provided a vortex fluid flow device comprising a vortex chamber, multiple forward flow inlets to the chamber and a reverse flow inlet to the chamber, the vortex fluid flow device being arranged such that in use there is a greater pressure drop across the device when there is reverse fluid flow, in the direction from the reverse flow inlet to the forward flow inlets, than when there is forward fluid flow, in the direction from the forward flow inlets to the reverse flow inlet.

In a Zobel diode such as that described in the background section, the turn-down ratio (or performance) is linked to the radius ratio (which may be approximated as the radius of the chamber divided by the radius of the forward flow inlet). With increasing radius ratio the pressure drop in the reverse flow direction will increase due to an increase in the velocity (and corresponding reduction in static pressure) of the flow at the forward flow inlet.

In many applications it is desirable to have a relatively large forward mass flow. Where an increase in the forward mass flow is desired, one solution is to increase the radius of the forward flow inlet. This will however result in a reduction in performance (a decrease in turn-down ratio caused by a decrease in the radius ratio). Increasing the radius of the chamber will allow increases in performance once again, but larger chambers are heavier and may be more difficult to physically accommodate in a system. Consequently with the traditional Zobel diode there may be a trade-off between potential forward mass flow and the turn-down ratio. Where size and weight constraints are an important consideration there is therefore a tendency to abandon vortex devices in favour of restrictor valves (despite their performance disadvantages when compared to vortex devices).

By increasing the number of forward flow inlets rather than the radius of a single forward flow inlet, the forward mass flow may be increased without reducing the radius ratio. A given reverse flow rate may therefore be maintained despite the increase in forward mass flow. Conversely a performance increase can be obtained for a given forward mass flow. In short the second forward flow inlet may offer a two fold increase in turn-down ratio and forward mass flow without impacting on the absolute reverse mass flow, or for a given forward mass flow provide a reduction in reverse mass flow, and an increase in performance.

The provision of additional forward flow inlets may also offer additional fluid system architecture options. By way of example, multiple flows arriving in the forward direction may be combined by the device, and a single flow arriving in the reverse direction may be split by the device.

In some embodiments there is at least one pair of forward flow inlets with each of the forward flow inlets in the pair on opposite walls of the chamber.

In some embodiments the forward flow inlets in at least one of the pairs have a circular cross-section. In other embodiments at least one of the forward flow inlets may have a non-circular cross-section.

In some embodiments the forward flow inlets in at least one of the pairs are coaxial. This may allow for the same pressure drop across all forward flow inlets. In other embodiments the forward flow inlets in at least one of the pairs are not coaxial. This may be desirable where different pressure drops across different forward flow inlets are required.

In some embodiments the forward flow inlets in at least one of the pairs are at the centre of their respective walls. This may allow for an increased turn-down ratio for a chamber of a particular size.

In some embodiments the forward flow inlets in at least one of the pairs have the same diameter. This may mean that the same mass flow occurs via each of the forward flow inlets in the pair and may also allow for an increased turn-down ratio. Where however it is desirable for there to be different mass flows through each forward flow inlet, the forward flow inlets in the pair may have different diameters.

In some embodiments there are exactly two forward flow inlets. This may allow for an increased turn-down ratio for a chamber of a particular size. This configuration may also mean that the vortex fluid flow device has a T-junction configuration, such that two flows are combined in the forward direction and a single flow is split in the reverse direction.

In some embodiments the device further comprises a single forward flow fluid source which when there is a forward flow supplies at least two of the forward flow inlets with fluid and when there is a reverse flow recombines fluid from at least two of the forward flow inlets.

In some embodiments the chamber is substantially cylindrical in shape, having top, bottom and side walls. The diameter of the cylinder may be greater than its height. The ratio of cylinder diameter to cylinder height may be between 4:1 and 7:1 and preferably between 5:1 and 6:1. The edges of the cylinder may be curved. The chamber may therefore be considered annular (where the centre of the annulus is occupied by forward flow inlets) or disc like. In alterative embodiments the chamber may be shaped differently; it may for example be substantially rhombohedral or biconic in shape. The shape may be selected to aid with flow from the forward flow inlets to the reverse flow inlet when there is forward flow.

In some embodiments the forward flow inlets enter from the top and/or bottom walls of the disc like chamber.

In some embodiments one or more of the forward flow inlets enters from a substantially perpendicular direction to the wall at the point from which it enters.

Alternatively however one or more of the forward flow inlets may not be perpendicular and may for example be angled towards the reverse flow inlet. This may reduce the pressure drop in the forward flow direction.

In some embodiments the reverse flow inlet enters from the side wall of the disc like chamber.

In some embodiments the reverse flow inlet is angled so as to be substantially tangential with the side wall at the point from which it enters. The vortex fluid flow device is arranged for use in a gas turbine engine in the control of fluid. The fluid may for example be gas such as air (which may be used for cooling and/or sealing and/or may be exhaust gas), oil, fuel, water or glycol mix.

According to the invention there is provided a fluid system comprising a vortex fluid flow device according to claim 1. The fluid system is arranged to supply air bled from a compressor system of a gas turbine engine to seal one or more bearing chambers in the gas turbine engine. The fluid system is arranged so that air is bled from a later stage of the compressor system when the engine is running slower and from an earlier stage of the compressor system when the engine is running faster. The forward flow inlets of the vortex fluid flow device are connected to a bleed from the earlier stage of the compressor system and the reverse flow inlet is connected to the areas surrounding the bearing chambers such that the forward flow direction is from the bleed to the areas surrounding the bearing chambers and the reverse flow direction is from the areas surrounding the bearing chambers to the bleed.

In some embodiments the bleed comprises a pair of bleed off-takes, each connected to one of two forward flow inlets of the vortex fluid flow device.

According to the invention there is provided a gas turbine according to claim 1. The skilled person will appreciate that a feature described in relation to any one of the above aspects of the invention may be applied mutatis mutandis to any other aspect of the invention.

Embodiments of the invention will now be described, by way of example only, with reference to the accompanying Figures, in which:
**Figure 1** is a sectional side view of a gas turbine engine;
**Figure 2** is a side view of a vortex fluid flow device according to an embodiment of the invention;
**Figure 3** is top view of the vortex fluid flow device shown in Figure 2;
**Figure 4** is a schematic diagram showing a mode of operation of the vortex fluid flow device shown in Figures 2 and 3;
**Figure 5** is a schematic diagram showing a mode of operation of the vortex fluid flow device shown in Figures 2 and 3;
**Figure 6** is a schematic diagram showing a mode of operation of an alternative vortex fluid flow device embodiment;
**Figure 7** is a schematic diagram showing another mode of operation of an alternative vortex fluid flow device embodiment;
Figure 8 is a cross-sectional side view of a vortex fluid flow device according to an embodiment of the invention;
Figure 9 is a top view of a vortex fluid flow device shown in Figure 8;
Figure 10 is a cross-sectional side view of a vortex fluid flow device according to an embodiment of the invention;
Figure 11 is a top view of a vortex fluid flow device shown in Figure 10;
Figure 12 is a cross-sectional side view of a vortex fluid flow device according to an embodiment of the invention.

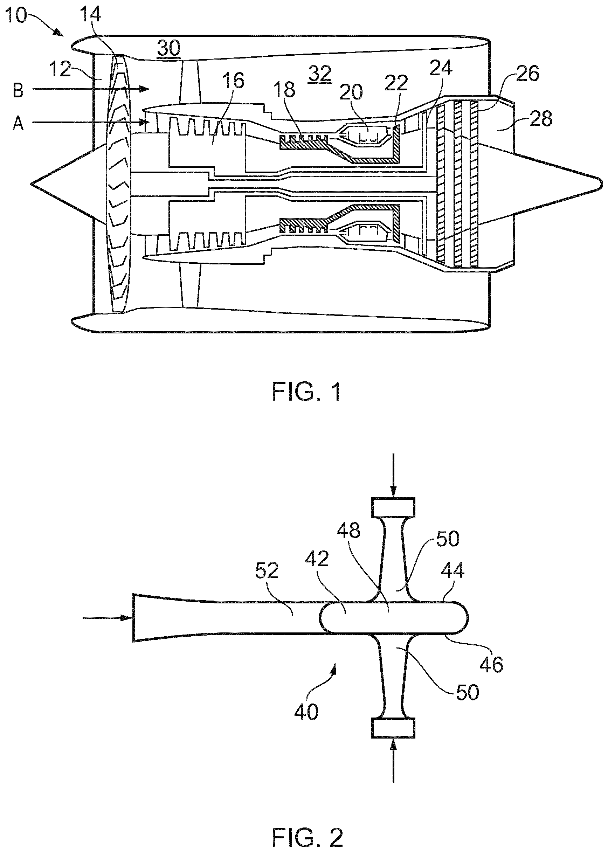

A gas turbine engine 10 is shown in Figure 1 and comprises an air intake 12 and a propulsive fan 14 which generates two airflows A and B. The gas turbine engine 10 comprises, in axial flow A, an intermediate pressure compressor 16, a high pressure compressor 18, a combustor 20, a high pressure turbine 22, an intermediate pressure turbine 24, a low pressure turbine 26 and an exhaust nozzle 28. A nacelle 30 surrounds the gas turbine engine 10 and defines, in axial flow B, a bypass duct 32.

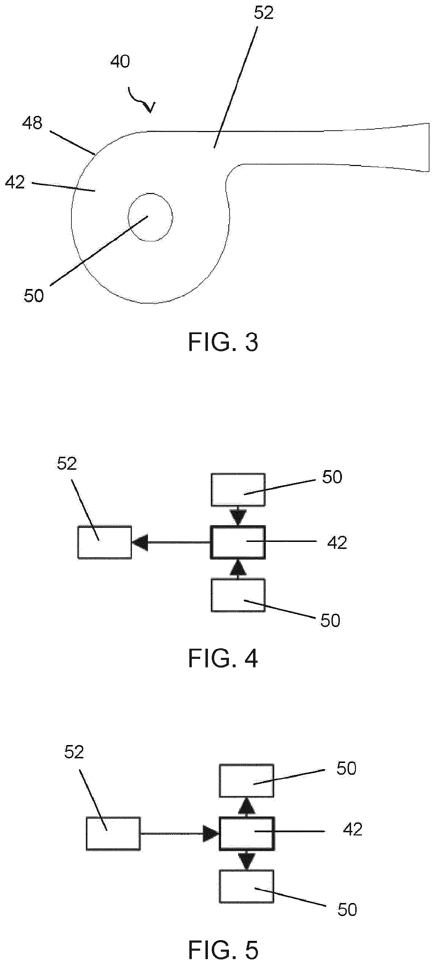

Referring now to Figures 2 and 3, a vortex fluid flow device is generally shown at 40 as may for example be used in control of air, oil or fuel flow in the gas turbine engine 10 of Figure 1.. The vortex fluid flow device 40 comprises a vortex chamber 42. The vortex chamber 42 is of substantially disc like shape, having parallel and opposed top 44 and bottom 46 walls and a curved side wall 48 spanning the gap between the top 44 and bottom 46 walls and joining them at their perimeters. The vortex chamber 42 defined by the top 44 bottom 46 and side 48 walls is fluid tight with the exception of multiple forward flow inlets 50 (in this case two) and a reverse flow inlet 52.

The two forward flow inlets 50 form a pair, one entering the vortex chamber 42 from the top wall 44 and one entering the vortex chamber 42 from the bottom wall 46. Each of the pair of forward flow inlets 50 extends towards and enters its respective wall 44, 46 from a direction perpendicular to that wall 44, 46 at the point of entry. As will be appreciated the pair of forward flow inlets 50 are provided on opposite walls 44, 46. Further the pair of forward flow inlets 50 have the same cross-sectional shape (circular) and diameter. The pair of forward flow inlets 50 are also coaxial, each being positioned at the centre of its respective wall 44, 46.

The reverse flow inlet 52 enters the vortex chamber 42 from the side wall 48. The reverse flow inlet 52 extends towards and enters the side wall 48 from a direction tangential to that side wall 48 at the point of entry.

With reference to Figures 2-5 it can be seen that the vortex fluid flow device 40 has a T-junction configuration and acts as a vortex diode arranged to produce different pressure drops between forward and reverse fluid flows through the device.

When there is forward flow (as shown in Figure 4), fluid is supplied to the vortex chamber 42 by the forward flow inlets 50. The fluid entering the chamber 42 travels relatively unhindered through the chamber 42 and out of the reverse flow inlet 52, thereafter supplying a component, system, exhaust or similar connected to the reverse flow inlet 52.

If however the fluid flow direction is reversed (as shown in Figure 5), such that fluid is supplied to the vortex chamber 42 by the reverse flow inlet 52, fluid entering the chamber 42 is guided by the side wall 48 into forming a vortex. This occurs in view of the reverse flow inlet 52 being positioned and angled to present the flow of fluid substantially tangentially to the side wall 48. The formation of the vortex causes a substantial pressure drop in the reverse direction. On entry to the chamber 42, flow in the reverse direction has a total pressure which encompasses both a static and dynamic pressure term. The velocity of the vortex formed in the chamber 42 at any particular point is inversely proportional to the streamline radius within the chamber 42. Thus at the smallest radius (at one of the forward flow inlets 50) the vortex experiences the highest velocity and dynamic pressure, corresponding to a drop in static pressure in this region. Having passed into one of the forward flow inlets 50, the fluid passes onward to supply a component, system, exhaust or similar connected to one, other or both of the forward flow inlets 50.

The vortex fluid flow device 40 is therefore arranged such that in use there is a greater pressure drop across the device when there is reverse fluid flow than when there is forward fluid flow. The difference in the respective pressure drops is characterised by the diodicity. This in turn is determined by the arrangement of the forward flow inlets 50 and the radius at which the reverse flow inlet 52 is positioned. In this case, the forward flow inlets 50 are coaxial, have a circular cross-section, have the same diameter and are at the centre of their respective opposed walls 44, 46 of a disc shaped vortex chamber 42. Consequently the vortex fluid flow device 40 has the maximum possible turn-down ratio for a disc-shaped chamber 42 of its particular diameter. Specifically the radius ratio between the streamline at which the flow enters for fluid travelling in the reverse flow direction to the radius of either of the forward flow inlets 50 is maximised.

An example application of the vortex fluid flow device 40 as shown in Figures 2-5 is as part of a bearing chamber sealing system in a gas turbine engine. Bearing chambers in gas turbine engines contain bearings used to allow support of rotating components (such as engine shafts) by static parts of the engine. The bearings are lubricated by oil. The oil is contained by the bearing chamber before it is scavenged and ultimately returned to the oil tank. With a view to preventing the leakage of oil from the bearing chamber into the surrounding engine, the area around the bearing chamber is pressurised with air from a compressor of the gas turbine. In this way any passage of air across seals of the bearing chamber tends to be into rather than out of the bearing chamber, thereby reducing oil leakage.

A complication concerns the different speeds at which the engine may be operated. Alterations in this speed tend to impact on the pressure inside the bearing chamber. The oil scavenge system is powered by rotation of the engine, scavenging more oil (and air) from the bearing chamber when the engine is running at high speed and vice versa. Consequently it is desirable to tailor the pressure outside of the bearing chamber to the engine speed. Without such tailoring the pressure differential across the bearing chamber seals might reverse (encouraging oil leakage) or may become too great in magnitude (potentially damaging the seals and/or other components).

The compressor air used to pressurise the area around the bearing chamber may therefore be taken from different compressor stages as the speed of the engine alters. It may be for example that when the engine is running at high speed, sealing air is taken from an earlier compressor stage (e.g. the second high pressure compressor stage), and when it is running at low speed, sealing air is taken from a later compressor stage (e.g. a fourth high pressure compressor stage). In a system such as this the vortex fluid flow device 40 may be positioned between the second high pressure compressor stage and the area surrounding the bearing chamber. The vortex fluid flow device 40 is arranged such that in the forward flow direction, the forward flow inlets are supplied with air from the second high pressure compressor stage, and the reverse flow inlet supplies the air to the area surrounding the bearing chamber.

With the arrangement described above there would be little pressure drop across the vortex fluid flow device 40 in the forward flow direction (that is when the second high pressure compressor stage is supplying air to the area surrounding the bearing chamber). When however the area surrounding the bearing chamber is supplied with air from the fourth high pressure compressor stage the vortex fluid flow device 40 would provide significant resistance to flow of that air to the second high pressure compressor stage.

The vortex fluid flow device 40 may be particularly advantageous in use as described above because:
a) Air is typically bled from the second high pressure compressor stage at two off-takes. Therefore in prior art systems it has been necessary to provide separate T-junction and flow diode components. The present device combines the functionality of these two components, reducing size and weight of the components.
b) As previously discussed the vortex fluid flow device 40 offers an improved turn-down ratio for a vortex chamber of a given size. The vortex fluid flow device 40 may for example therefore decrease pressure loss from the area surrounding the bearing chamber to the second high pressure compressor stage when it is being supplied from the fourth high pressure compressor stage. This may improve the sealing of the bearing chamber without the need to increase the size of the flow diode (which would incur weight and size penalties). The reduction in leakage of air from the fourth high pressure compressor stage to the second high pressure compressor stage via the area surrounding the bearing chamber and vortex fluid flow device 40 may also reduce spoiling of the flow through the compressor.
c) The vortex fluid flow device has no moving parts and is not therefore susceptible to damage resulting from degradation of abradable materials (in contrast to a check valve solution).

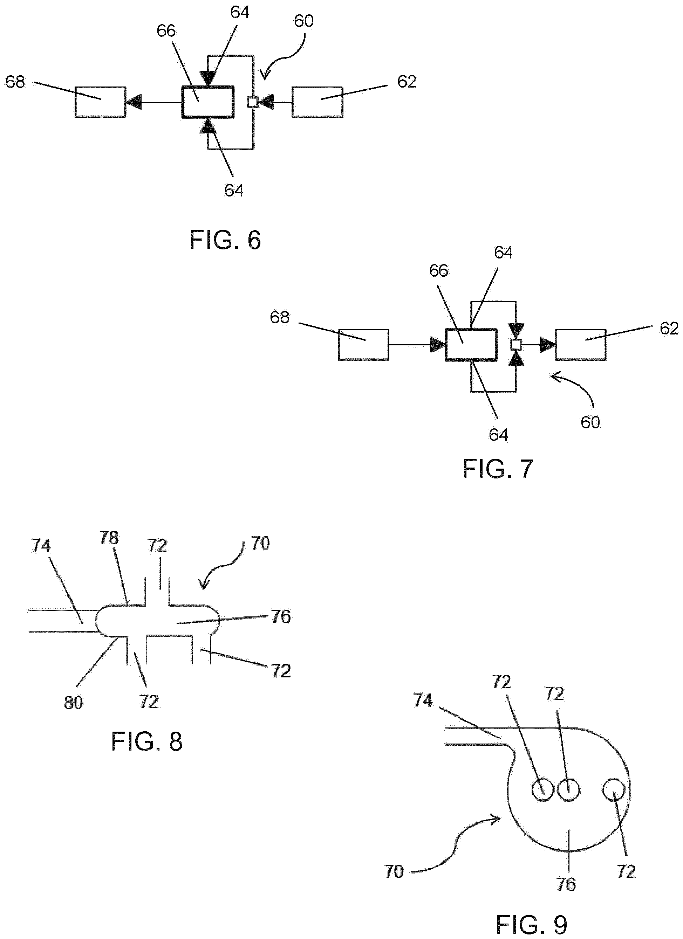

The T-junction configuration of the vortex fluid flow device 40 (as discussed with respect to Figures 2-5) may be convenient where it is desirable for the flow in the forward direction to be combined and the flow in the reverse direction to be split (as per the example above). With reference to Figures 6 and 7, where however a single flow is ultimately desired to and from a vortex fluid flow device 60 in both forward and reverse directions, a single forward flow fluid source 62 can be connected to forward flow inlets 64. As shown in Figure 6, where then there is forward flow, both forward flow inlets 64 are supplied by the forward flow fluid source 62. Fluid then enters a vortex chamber 66, before leaving the vortex chamber 66 via a reverse flow inlet 68. Similarly, as shown in Figure 7, when there is reverse flow from the reverse flow inlet 68, both forward flow inlets 64 supply the forward flow fluid source 62.

It is possible to make various alterations to the configurations shown in Figures 1-7. By way of example different numbers of forward and reverse flow inlets may be provided. The diameters, cross-sectional shapes, cross-sectional radii and radial positions with respect to the vortex chamber may all also all be varied for each inlet. Altering the shape of the vortex chamber is also possible. Further inlets may be paired and positioned coaxially (or not) and/or enter from opposing walls (or not). These possible variations allow for an appropriate arrangement to be selected according to the particular requirements of the application. Each inlet may be thought of as a source and/or recipient of fluid for which there is a desired pressure and mass flow given particular conditions. By making arrangement selections as discussed above, that mass flow and pressure may be selected for each inlet for both forward and reverse flow directions. Additionally or alternatively the turn-down ratio may be determined in this way.

Examples of the alterations discussed above are briefly discussed with reference to Figures 8-12.

Referring to Figure 8 and 9 a vortex fluid flow device 70 is shown having three forward flow inlets 72 and a reverse flow inlet 74. In this case two of the forward flow inlets 72 enter a disc-shaped vortex chamber 76 of the vortex fluid flow device 70 from a top wall 78 and one enters from a bottom wall 80. The reverse flow inlet 74 is arranged as in the embodiments of Figures 1-7. Each of the forward flow inlets 72 have different radial positions with respect to the vortex chamber 76 radius. The forward flow inlets 72 entering away from the centre of the bottom wall 80 (i.e. with increased radial position with respect to the chamber 76) will reduce the turn-down ratio by comparison with the embodiments of Figures 1-7. Nonetheless fluid flow in the reverse direction will be split three ways, and fluid flow in the forward direction will be combined from three flows to one. This may be advantageous in certain arrangements, allbeit at the expense of turn-down ratio. Further, the mass flow in the forward direction may be increased due to the provision of the additional forward flow inlet 72 and where there is fluid flow in the reverse direction the pressure drop will be different across each forward flow inlet 72.

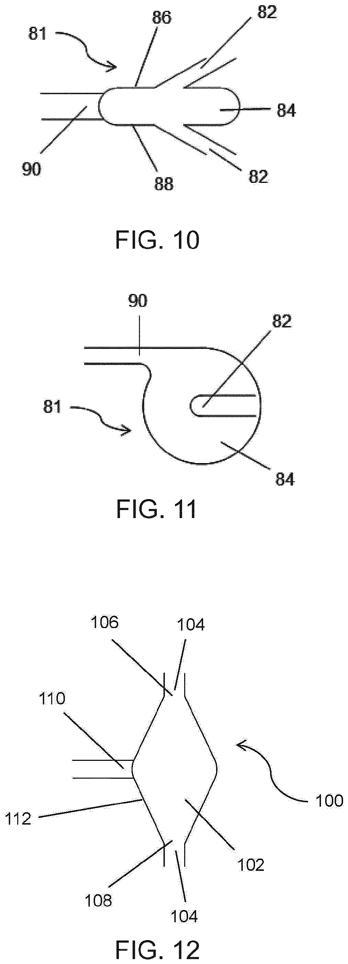

Figures 10 and 11 show a vortex fluid flow device 81 where the angle at which a pair of forward flow inlets 82 approach and enter a vortex chamber 84 is shifted away from perpendicular with respect to the point of entry on the respective top 86 or bottom 88 wall of the chamber 84. Each of the forward flow inlets 82 is angled so as fluid travelling in the forward direction and entering through one or other of the forward flow inlets 82 is incident substantially in the direction of a reverse flow inlet 90. This may reduce the pressure drop in the forward flow direction without impacting on the pressure drop in the reverse flow direction. Furthermore, design freedom in determining the angle of the forward flow inlets 82 may be advantageous in facilitating alternative system architectures (e.g. pipe layouts).

Referring now to Figure 12 a vortex fluid flow device 100 is shown having an alternative vortex chamber 102 shape. In this case the vortex chamber 102 has a biconic shape, there being opposed forward flow inlets 104 entering at top 106 and bottom 108 vertices of the chamber 102 and a reverse flow inlet 110 entering at and substantially tangential to a side wall 112 of the chamber 102. As will be appreciated many alternative regular or irregular chamber shapes may be used (e.g. rhombohedral, ellipsoid, spherical or disc-like). Different chamber shapes may impact on the pressure drop in forward and reverse flow directions as well as offering different architecture options particularly with regard to arranging coaxial forward flow inlets.

It will be understood that the invention is not limited to the embodiments above-described and various modifications and improvements can be made without departing from the various concepts described herein. Except where mutually exclusive any of the features may be employed separately or in combination with any other features and the invention extends to and includes all combinations and sub-combinations of one or more features described herein in any form of vortex fluid flow device.

## Claims

1. A gas turbine engine comprising a compressor system, one or more bearing chambers and a fluid system arranged in use to supply air bled from the compressor system to seal the one or more bearing chambers, the fluid system being arranged to bleed air from a later stage of the compressor system when the engine is running slower and from an earlier stage of the compressor system when the engine is running faster, the fluid system comprising a vortex fluid flow device (40) comprising a vortex chamber (42), multiple forward flow inlets (50) to the chamber (42) and a reverse flow inlet (52) to the chamber (42), the vortex fluid flow device (40) being arranged such that in use there is a greater pressure drop across the device (40) when there is reverse fluid flow, in the direction from the reverse flow inlet (52) to the forward flow inlets (50), than when there is forward fluid flow, in the direction from the forward flow inlets (50) to the reverse flow inlet (52), the forward flow inlets (50) of the vortex fluid flow device (40) being connected to a bleed from the earlier stage of the compressor system and the reverse flow inlet being connected to the areas surrounding the bearing chambers such that the forward flow direction is from the bleed to the areas surrounding the bearing chambers and the reverse flow direction is from the areas surrounding the bearing chambers to the bleed.

2. A gas turbine engine according to claim 1 where the bleed comprises a pair of bleed off-takes, each connected to one of two forward flow inlets (50) of the vortex fluid flow device (40).

3. A gas turbine engine according to claim 1 or claim 2 where there is at least one pair of forward flow inlets (50) with each of the forward flow inlets (50) in the pair on opposite walls of the chamber (42).

4. A gas turbine engine according to claim 3 where the forward flow inlets (50) in at least one of the pairs are coaxial.

5. A gas turbine engine according to claim 3 or claim 4 where the forward flow inlets (50) in at least one of the pairs are at the centre of their respective walls.

6. A gas turbine engine according to any of claims 3 to 5 where the forward flow inlets (50) in at least one of the pairs have the same diameter.

7. A gas turbine engine according to any preceding claim where there are exactly two forward flow inlets (50).

8. A gas turbine engine according to any preceding claim where the device further comprises a single forward flow fluid source (62) which when there is a forward flow supplies at least two of the forward flow inlets (50) with fluid and when there is a reverse flow recombines fluid from at least two of the forward flow inlets (50).

9. A gas turbine engine according to any preceding claim where the chamber (42) is substantially cylindrical in shape, having top (44), bottom (46) and side walls (48).

10. A gas turbine engine according to claim 9 where the forward flow inlets (50) enter from the top (44) and/or bottom (46) walls of the substantially cylindrical chamber (42).

11. A gas turbine engine according to claim 9 or 10 where the reverse flow inlet (52) enters from the side wall (48) of the disc like chamber (42).

12. A gas turbine engine according to claim 11 where the reverse flow inlet (52) is angled so as to be substantially tangential with the side wall (48) at the point from which it enters.

## Patentansprüche

1. Gasturbinenmotor umfassend ein Verdichtersystem, eine oder mehrere Tragkammern und ein Fluidsystem, die in der Verwendung angeordnet sind, um Luft zuzuführen, die aus dem System entlüftet wurde, um die eine oder mehreren Tragkammern abzudichten, wobei das Fluidsystem angeordnet ist, um Luft aus einer späteren Stufe des Verdichtersystems zu entlüften, wenn der Motor langsamer läuft, und aus einer früheren Stufe des Verdichtersystems, wenn der Motor schneller läuft, das Fluidsystem umfassend eine Vortex-Fluidstromvorrichtung (40) umfassend eine Vortex-Kammer (42), mehrfache Vorwärtsstromeinlässe (50) zu der Kammer (42) und einen Rückwärtsstromeinlass (52) zu der Kammer (42), wobei die Vortex-Fluidstromvorrichtung (40) derart angeordnet ist, dass es in der Verwendung einen größeren Druckabfall in der Vorrichtung (40) gibt, wenn es einen Rückwärtsfluidstrom in der Richtung vom Rückwärtsstromeinlass (52) zu den Vorwärtsstromeinlässe (50) gibt, als wenn es einen Vorwärtsfluidstrom in der Richtung von Vorwärtsstromeinlässen (50) zum dem Rückwärtsstromeinlass (52) gibt, wobei die Vorwärtsstromeinlässe (50) der Vortex-Fluidstromvorrichtung (40) mit einer Entlüftung aus der früheren Stufe des Verdichtersystems verbunden sind und der Rückwärtsstromeinlass mit den Flächen verbunden ist, die Tragkammern umgeben, sodass die Vorwärtsstromrichtung von der Entlüftung zu den umgebenden Flächen der Tragkammern ist und die Rückwärtsstromrichtung von den umgebenden Flächen der Tragkammern zu der Entlüftung ist.

2. Gasturbinenmotor nach Anspruch 1, wobei die Entlüftung ein Paar Entlüftungsentnahmen umfasst, die jeweils mit einem der zwei Vorwärtsstromeinlässe (50) der Vortex-Fluidstromvorrichtung (40) verbunden sind.

3. Gasturbinenmotor nach Anspruch 1 oder Anspruch 2, wobei es mindestens ein Paar Vorwärtsstromeinlässe (50) mit jedem der Vorwärtsstromeinlässe (50) im Paar auf gegenüberliegenden Wänden der Kammer (42) gibt.

4. Gasturbinenmotor nach Anspruch 3, wobei die Vorwärtsstromeinlässe (50) in mindestens einem der Paare koaxial sind.

5. Gasturbinenmotor nach Anspruch 3 oder Anspruch 4, wobei die Vorwärtsstromeinlässe (50) in mindestens einem der Paare in der Mitte ihrer jeweiligen Wände sind.

6. Gasturbinenmotor nach einem der Ansprüche 3 bis 5, wobei die Vorwärtsstromeinlässe (50) in mindestens einem der Paare denselben Durchmesser haben.

7. Gasturbinenmotor nach einem vorherigen Anspruch, wobei es exakt zwei Vorwärtsstromeinlässe (50) gibt.

8. Gasturbinenmotor nach einem vorherigen Anspruch, wobei die Vorrichtung ferner eine einzelne Vorwärtsstrom-Fluidquelle (62) umfasst, die, wenn es einen Vorwärtsstrom gibt, mindestens zwei der Vorwärtsstromeinlässe (50) mit Fluid versorgt, und wenn es einen Rückwärtsstrom gibt, Fluid von mindestens zwei der Vorwärtsstromeinlässe (50) rekombiniert.

9. Gasturbinenmotor nach einem vorherigen Anspruch, wobei die Kammer (42) eine im Wesentlichen zylindrische Form mit einer oberen (44), unteren (46) Wand und Seitenwänden (48) hat.

10. Gasturbinenmotor nach Anspruch 9, wobei die Vorwärtsstromeinlässe (50) von der oberen (44) und/oder unteren (46) Wand der im Wesentlichen zylindrischen Kammer (42) eintreten.

11. Gasturbinenmotor nach Anspruch 9 oder 10, wobei der Rückwärtsstromeinlass (52) von der Seitenwand (48) der scheibenähnlichen Kammer (42) eintritt.

12. Gasturbinenmotor nach Anspruch 11, wobei der Rückwärtsstromeinlass (52) abgewinkelt ist, sodass er an dem Punkt, wo er eintritt, im Wesentlichen tangential zu der Seitenwand (48) ist.

## Revendications

1. Moteur à turbine à gaz comprenant un système de compresseur, une ou plusieurs chambres de roulement et un système fluidique agencé pour fournir, lors de l'utilisation, de l'air prélevé du système de compresseur afin d'assurer l'étanchéité d'une ou plusieurs chambres de roulement, ledit système fluidique étant agencé pour prélever de l'air d'un étage postérieur du système de compresseur lorsque le moteur fonctionne plus lentement, et d'un étage antérieur du système de compresseur lorsque le moteur fonctionne plus vite, ledit système fluidique comprenant un dispositif d'écoulement de fluide tourbillonnaire (40) comprenant une chambre tourbillonnaire (42), de multiples entrées d'écoulement vers l'avant (50) de la chambre (42) et une entrée d'écoulement inverse (52) de la chambre (42), ledit dispositif d'écoulement de fluide tourbillonnaire (40) étant agencé de sorte que, lors de l'utilisation, la chute de pression à travers le dispositif (40) lors d'un écoulement de fluide inverse selon la direction allant de l'entrée d'écoulement inverse (52) vers les entrées d'écoulement vers l'avant (50), soit supérieure à la chute de pression lors d'un écoulement de fluide vers l'avant, selon la direction allant des entrées d'écoulement vers l'avant (50) vers l'entrée d'écoulement inverse (52), les entrées d'écoulement vers l'avant (50) du dispositif d'écoulement de fluide tourbillonnaire (40) étant raccordé à une purge provenant d'un étage antérieur du système de compresseur et l'entrée d'écoulement inverse étant raccordée aux zones entourant les chambres de roulement de sorte que la direction d'écoulement vers l'avant aille de la purge vers les zones entourant les chambres de roulement et que la direction d'écoulement inverse aille des zones entourant les chambres de roulement vers la purge.

2. Moteur à turbine à gaz selon la revendication 1, ladite purge comprenant une paire de prises de purge, chacune raccordée à l'une des deux entrées d'écoulement vers l'avant (50) du dispositif d'écoulement de fluide tourbillonnaire (40).

3. Moteur à turbine à gaz selon la revendication 1 ou 2, au moins une paire d'entrées d'écoulement vers l'avant (50) étant présente avec chacune des entrées d'écoulement vers l'avant (50) dans la paire sur des parois opposées de la chambre (42).

4. Moteur à turbine à gaz selon la revendication 3, lesdites entrées d'écoulement vers l'avant (50) dans au moins l'une des paires étant coaxiales.

5. Moteur à turbine à gaz selon la revendication 3 ou 4, lesdites entrées d'écoulement vers l'avant (50) dans au moins l'une des paires étant au centre de leurs parois respectives.

6. Moteur à turbine à gaz selon l'une quelconque des revendications 3 à 5, lesdites entrées d'écoulement vers l'avant (50) dans au moins l'une des paires possédant le même diamètre.

7. Moteur à turbine à gaz selon l'une quelconque des revendications précédentes, lesdites entrées d'écoulement vers l'avant (50) présentes étant exactement au nombre de deux.

8. Moteur à turbine à gaz selon l'une quelconque des revendications précédentes, ledit dispositif comprenant en outre une unique source de fluide d'écoulement vers l'avant (62) qui alimente en fluide au moins deux des entrées d'écoulement vers l'avant (50) lorsqu'un écoulement vers l'avant est présent et recombine le fluide provenant d'au moins deux des entrées d'écoulement vers l'avant (50) lorsqu'un écoulement inverse est présent.

9. Moteur à turbine à gaz selon l'une quelconque des revendications précédentes, ladite chambre (42) étant sensiblement de forme cylindrique, possédant des parois haute (44), basse (46) et latérale (48).

10. Moteur à turbine à gaz selon la revendication 9, lesdites entrées d'écoulement vers l'avant (50) débouchant des parois hautes (44) et/ou basses (46) de la chambre sensiblement cylindrique (42).

11. Moteur à turbine à gaz selon la revendication 9 ou 10, ladite entrée d'écoulement inverse (52) entrant la paroi latérale (48) de la chambre en forme de disque (42).

12. Moteur à turbine à gaz selon la revendication 11, ladite entrée d'écoulement inverse (52) étant inclinée de façon à être sensiblement tangentielle à la paroi latérale (48) au niveau du point à partir duquel elle entre.
